# EUROPEAN PATENT SPECIFICATION

(11) **EP 3 421 987 B1**
(45) Date of publication and mention of the grant of the patent: **24.12.2025**
(21) Application number: 18179155.9
(22) Date of filing: 21.06.2018
(51) Int. Cl.: G01N 30/74, G01N 30/88, G01N 21/17, G01N 30/34

(54) **LIQUID CHROMATOGRAPHY DEVICE COMPRISING A FLOW CELL**
FLÜSSIGCHROMATOGRAFIEVORRICHTUNG MIT EINER DURCHFLUSSZELLE
DISPOSITIF DE CHROMATOGRAPHIE LIQUIDE AVEC CUVE À CIRCULATION

(30) Priority: 26.06.2017 JP 2017124497
(43) Date of publication of application: 02.01.2019
(73) Proprietor: ARKRAY, Inc., Kyoto-shi, Kyoto 601-8045 (JP)
(72) Inventor: SEZAKI, Akira, Kyoto-shi, Kyoto 602-0008 (JP); TAKAGI, Takeshi, Kyoto-shi, Kyoto 602-0008 (JP)
(74) Representative: Dehns

(56) References cited:
- EP-A1- 1 739 406
- EP-A1- 1 739 406
- EP-A1- 2 012 111
- EP-A1- 2 012 111
- EP-A2- 0 146 781
- WO-A1-2016/170681
- US-A- 4 011 451
- US-A- 4 822 168
- EVANS C E ET AL: "Evaluation of refractive index artifacts in liquid chromatographic absorbance detection", JOURNAL OF CHROMATOGRAPHY A, ELSEVIER, AMSTERDAM, NL, vol. 503, 1 January 1990 (1990-01-01), pages 127 - 154, XP026487780, ISSN: 0021-9673, [retrieved on 19900101], DOI: 10.1016/S0021-9673(01)81496-5

## Description

### FIELD

The embodiments discussed herein are related to a liquid chromatography device.

### BACKGROUND

Patent Document 1 (Japanese Patent No. 4144117) discloses a measurement device in which a diluted blood sample is held in a column and a valve is used to switch between three types of eluents having differing concentrations of sodium sulfate, such that the eluents are supplied to the column in order of increasing sodium sulfate concentration. This measurement device uses a detector to continuously detect hemoglobin as it gradually dissolves out of the column, and calculates the glucose concentration in the sample based on the proportion of unstable hemoglobin A1c in the overall amount of hemoglobin. The detector emits light at the wavelength of maximum absorbance of hemoglobin, 415 nm, and the overall amount of hemoglobin, the amount of unstable hemoglobin A1c, and so on is calculated by detecting absorbance.

Non-Patent Document 1 (Modern High-Performance Liquid Chromatography, by Toshio Nanbara and Nobuo Ikekawa, Hirokawa Books, pp. 172-174, published 15 January 1988) describes technology related to high-performance liquid chromatography. Non-Patent Document 1 describes enlarging the inner diameter of a flow cell, and configuring the inner diameter of the flow cell so as to increase on progression toward an outlet of the flow cell. Such a flow cell structure is said to improve an issue relating to background signals due to refractive index effects.

Although the detector of the measurement device described is not clearly described in Patent Document 1 (Japanese Patent No. 4144117), after eluent passes through the column, the eluent would, for example, pass through a flow cell in the detector together with separated sample components. The flow channel of such a flow cell would, for example, be configured with an inner diameter of approximately 1 mm, with a narrow flow channel being commonplace.

When eluent thus passes through a narrow flow cell with a flow channel having an inner diameter of approximately 1 mm, light may strike the wall faces of the flow cell, with some light being absorbed and some light being reflected and output from the flow cell. When this occurs, if there is a large change in the concentration of the eluent, a lensing effect arises at the interface between the two types of eluent with differing concentrations. Changing the refractive index of light transmitted through the flow channel changes the ratio of the amount of light absorbed by the wall faces of the flow cell to the amount of light reflected thereby. Due to this phenomenon, for example, an image of the light source (for example, a filament shadow when the light source is a lamp, or the shape of a chip and wire bonding shadows when the light source is a LED) may enter a photodetector or may miss the photodetector, changing the amount of light that is detected thereby.

Accordingly, even when the eluents employed are of the same type, there may be disturbances in a chromatogram baseline before and after switching between eluents with differing concentrations. When the baseline changes, the surface area of components to be detected may change.

In the structure described in Non-Patent Document 1, distortion of the chromatogram baseline is suppressed by either enlarging the inner diameter of the flow cell or by configuring the inner diameter of the flow cell so as to increase on progression toward the outlet of the flow cell. However, when the inner diameter of the flow cell is enlarged, the internal capacity of the flow cell increases. Further, when the inner diameter of the flow cell is configured so as to increase on progression toward the outlet of the flow cell, in addition to the internal capacity of the flow cell increasing, the structure of the flow cell is made more complex.

EP-A-2012111 discloses a liquid chromatography device in accordance with the pre-characterizing portion of claim 1.

EP 1739406 A1 discloses a flow cell device, sensor unit and assay apparatus in which non-specific adsorption can be prevented in a rapid assay.

WO 2016/170681 A1 discloses an optical measuring apparatus that irradiates light to a sample liquid in a cell and detects transmitted light, scattered light, fluorescence, etc. obtained from the sample liquid with respect to the sample liquid in the cell.

"Evaluation of refractive index artifacts in liquid chromatographic absorbance detection" by CE Evans et al., (Journal of Chromatography A, vol. 503, January 1990, pages 127-154) is a study focused on overcoming the detector anomalies in chromatography devices produced by refractive index gradients caused by rapid changes in solvents by modeling a dynamic lens.

### SUMMARY

In consideration of the above circumstances, an object of at least preferred embodiments of the present disclosure is to obtain a liquid chromatography device capable of suppressing the disturbance of a chromatogram baseline even when employing eluents with differing concentrations.

The present invention is defined in the appended claims. The present invention provides a liquid chromatography device comprising: a column operable to separate components in a specimen sample; an eluent supply mechanism operable to alternately supply two or more types of eluent to the column, wherein said eluents have differing salt concentrations, including a first eluent and a second eluent; and a detection apparatus for receiving the eluents after the eluents have passed through the column, the detection apparatus being configured to detect a specified component of the specimen sample contained in the eluents, the detection apparatus comprising: a flow cell comprising a flow channel for receiving a flow of eluents, a light source that is provided outside of the flow cell and that is operable to irradiate light onto the eluents flowing through the flow channel, a light-receiving unit that is provided outside of the flow cell and that is configured to receive light that has passed through the flow cell, characterized in that the detection apparatus comprises a scattering plate capable of randomly scattering the light irradiated from the light source, the scattering plate being provided between the light source and the flow channel of the flow cell along a direction of travel of light from the light source, so that in use, the light irradiated from the light source shines on the flow channel of the flow cell in a randomly scattered state.

In the liquid chromatography device of the present disclosure, the light-receiving unit may include a beam splitter that is provided outside the flow cell and that splits light that has passed through the eluents flowing through the flow channel, a first bandpass filter that transmits one wavelength of light split at the beam splitter, a first light receiver that receives light transmitted through the first bandpass filter, a second bandpass filter that transmits another wavelength of light split at the beam splitter, and a second light receiver that receives light transmitted through the second bandpass filter.

In the liquid chromatography device of the present disclosure, the scattering plate is provided between the light source and the flow channel of the flow cell.

In the liquid chromatography device of the present disclosure, the scattering plate may configure at least a portion of a wall of the flow cell.

In the liquid chromatography device of the present disclosure, the scattering plate may be configured including a sheet of resin that randomly scatters the light due to either having a translucent white color or at least a portion of a surface of the sheet of resin being roughened.

In the liquid chromatography device of the present disclosure, the scattering plate may be configured including a sheet of glass that randomly scatters the light due to either having a translucent white color or at least a portion of a surface of the sheet of glass being roughened.

In the liquid chromatography device of the present disclosure, the scattering plate may be configured including a lens that randomly scatters the light due to either having a translucent white color or at least a portion of a surface of the lens being roughened.

The liquid chromatography device of the present disclosure may be capable of suppressing the disturbance of a chromatogram baseline even when employing eluents with differing concentrations.

### BRIEF DESCRIPTION OF DRAWINGS

Certain preferred embodiments of the present invention will now be described by way of example only and with reference to the accompanying drawings in which:
Fig. 1 is a system configuration diagram illustrating a liquid chromatography device according to a first exemplary embodiment;
Fig. 2 is a system configuration diagram illustrating a liquid chromatography device according to the first exemplary embodiment when a six-way valve has been rotated into a first state;
Fig. 3 is a system configuration diagram illustrating a liquid chromatography device according to the first exemplary embodiment when a six-way valve has been rotated into a second state;
Fig. 4 is a cross-section illustrating a detection apparatus employed in a liquid chromatography device according to the first exemplary embodiment, in a state in which eluent La that has been passed through a column flows therethrough;
Fig. 5 is a cross-section illustrating a detection apparatus employed in a liquid chromatography device according to the first exemplary embodiment, in a state in which eluent La that has been passed through a column is switched with eluent Lb;
Fig. 6 is a cross-section illustrating a detection apparatus employed in a liquid chromatography device according to the first exemplary embodiment, in a state in which eluent Lb that has been passed through a column flows therethrough;
Fig. 7 is a cross-section illustrating a detection apparatus employed in a liquid chromatography device according to the first exemplary embodiment, in a state in which eluent Lb that has been passed through a column is switched with eluent La;
Fig. 8 is a schematic diagram of a detection apparatus employed in a liquid chromatography device according to the first exemplary embodiment, and is for explaining light paths caused by a scattering plate when one type of eluent flows therethrough;
Fig. 9 is a schematic diagram of a detection apparatus employed in a liquid chromatography device according to the first exemplary embodiment, and is for explaining light paths caused by a scattering plate when switching between two types of eluent;
Fig. 10 is a baseline illustrating the relationship between measurement time and absorbance when a scattering plate is present in a liquid chromatography device according to the first exemplary embodiment;
Fig. 11 is a schematic diagram of a detection apparatus employed in a liquid chromatography device of a comparative example, and is for explaining light paths when one type of eluent flows therethrough;
Fig. 12 is a schematic diagram of a detection apparatus employed in a liquid chromatography device of a comparative example, and is for explaining light paths when switching between two types of eluent;
Fig. 13 is a schematic diagram of a detection apparatus employed in a liquid chromatography device of a comparative example, and is for explaining light paths to a sample photodetector and a reference photodetector when switching between two types of eluent;
Fig. 14 is a baseline illustrating the relationship between measurement time and absorbance when a scattering plate is not present in a liquid chromatography device according to a comparative example;
Fig. 15 is a diagram illustrating the relationship between measurement time and absorbance when absorbance for which there was no scattering plate is subtracted from absorbance for which there was a scattering plate;
Fig. 16 is a cross-section illustrating a detection apparatus employed in a liquid chromatography device of a second exemplary embodiment;
Fig. 17 is a cross-section illustrating a detection apparatus employed in a liquid chromatography device of a third exemplary embodiment; and
Fig. 18 is a cross-section illustrating a detection apparatus employed in a liquid chromatography device of a fourth exemplary embodiment.

### DESCRIPTION OF EMBODIMENTS

Explanation follows regarding embodiments of the present disclosure, with reference to the drawings. Note that in the present specification, when "to" is employed in expressing a range of numerical values, this means a range that includes the numerical values before and after "to" as the lower limit and upper limit of the range.

### First Exemplary Embodiment

### Overall Configuration of Liquid Chromatography Device

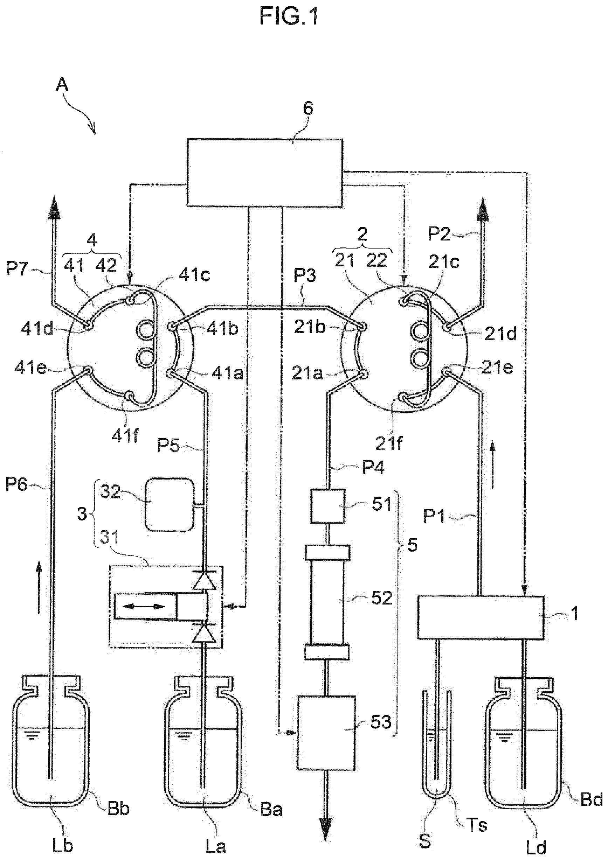

Fig. 1 is a system configuration diagram illustrating a liquid chromatography device A of a first exemplary embodiment. The liquid chromatography device A of the first exemplary embodiment includes a sample preparation mechanism 1, a flow channel switching valve 2, a delivery mechanism 3, a flow channel switching valve 4, an analysis unit 5, and a controller 6. The liquid chromatography device A performs liquid chromatography on a specimen S such as, for example, blood.

The sample preparation mechanism 1 produces a sample for liquid chromatography by diluting a predetermined amount of a specimen S collected from a phlebotomy tube Ts with a diluent Ld collected from a bottle Bd at a predetermined ratio. The sample preparation mechanism 1 includes, for example, a needle-shaped nozzle for collecting the specimen S from the phlebotomy tube Ts, a collecting tube for collecting diluent Ld from the bottle Bd, and a mixing/agitation mechanism that mixes the specimen S and the diluent Ld.

The flow channel switching valve 2 includes, for example, a six-way valve 21 and an injection loop 22. The six-way valve 21 includes ports 21a, 21b, 21c, 21d, 21e, and 21f, and the six-way valve 21 is configured so as to rotate freely with respect to the injection loop 22. The ports 21a, 21b, the ports 21c, 21d, and the ports 21e, 21f are respectively coupled together by mutually independent flow channels. In the state illustrated, the port 21a is connected to piping P4, the port 21b is connected to piping P3, the ports 21c, 21f are connected to the injection loop 22, the port 21d is connected to piping P2, and the port 21e is connected to the sample preparation mechanism 1 via piping P1. The injection loop 22 is for stocking a given amount of the sample.

The delivery mechanism 3 and the flow channel switching valve 4 serve as an example of an eluent supply mechanism in the present disclosure. The delivery mechanism 3 is for delivering eluent (for example, a solvent) La stored in a bottle Ba to the flow channel switching valve 4, and is provided along piping P5. The delivery mechanism 3 includes a plunger pump 31 and a damper 32. The plunger pump 31 is structured including a plunger that moves back and forth and a one-way valve, and corresponds to one example of a fixed-capacity pump. The damper 32 functions to lessen pulsations arising due to the plunger pump 31.

The flow channel switching valve 4 includes, for example, a six-way valve 41 and an injection loop 42. The six-way valve 41 includes ports 41a, 41b, 41c, 41d, 41e, and 41f, and the six-way valve 41 is configured so as to rotate freely with respect to the injection loop 42. The ports 41a, 41b, the ports 41c, 41d, and the ports 41e, 41f are respectively coupled together by mutually independent flow channels. In the state illustrated, the port 41a is connected to the delivery mechanism 3 via piping P5, the port 41b is connected to the flow channel switching valve 2 via the piping P3, the ports 41c, 41f are connected to the injection loop 42, the port 41d is connected to piping P7, and the port 41e is connected to a bottle Bb storing eluent (for example, a solvent) Lb via piping P6. In the first exemplary embodiment, the eluent Lb has a higher concentration of salt than the eluent La. The injection loop 42 is for stocking a given amount of the eluent Lb. In the first exemplary embodiment, the capacity of the injection loop 42 is, for example, approximately 142 µL. This corresponds to an amount delivered by the delivery mechanism 3 in five seconds.

The analysis unit 5 is connected to the flow channel switching valve 2 via the piping P4, and is where liquid chromatography analysis is performed. The analysis unit 5 is configured by a pre-filter 51, a column 52, and a detection apparatus 53. The pre-filter 51 prevents unwanted matter from entering the column 52. The column 52 holds a filler for adsorbing the introduced sample. After the sample has been adsorbed on the filler, the eluent La is run through the column 52, and the adsorbed sample is desorbed by the eluent La. Then, the desorbed sample and the eluent La flow through and are discharged from the column 52 as eluate. The detection apparatus 53 is configured to analyze the sample composition by measuring the absorbance of the eluate flowing from the column 52.

The controller 6 controls drive of each of the sample preparation mechanism 1, the flow channel switching valve 2, the delivery mechanism 3, the flow channel switching valve 4, and the analysis unit 5. The controller 6, for example, includes a CPU, memory, and an interface for the exchange of signals. The controller 6 controls processing for sample analysis and subsequent analysis, which is described below.

### Overview of Liquid Chromatography Device Analysis

Explanation follows regarding analysis that employs the liquid chromatography device A, with reference to Fig. 1 to Fig. 3.

First, the liquid chromatography device A is placed into the initial analysis state illustrated in Fig. 1. In Fig. 1, a sample SL is prepared by diluting a specimen S with diluent Ld in the sample preparation mechanism 1.

Next, as illustrated in Fig. 1, the sample SL is introduced into the injection loop 22. This introduction is for example performed by a suction pump (not illustrated in the drawings) disposed downstream of the piping P2. At this time, eluent Lb is also introduced into the injection loop 42. This introduction is for example performed by a suction pump (not illustrated in the drawings) disposed downstream of the piping P7. A given amount of the sample SL and a given amount of the eluent Lb is thereby respectively stocked in the injection loop 22 and the injection loop 42.

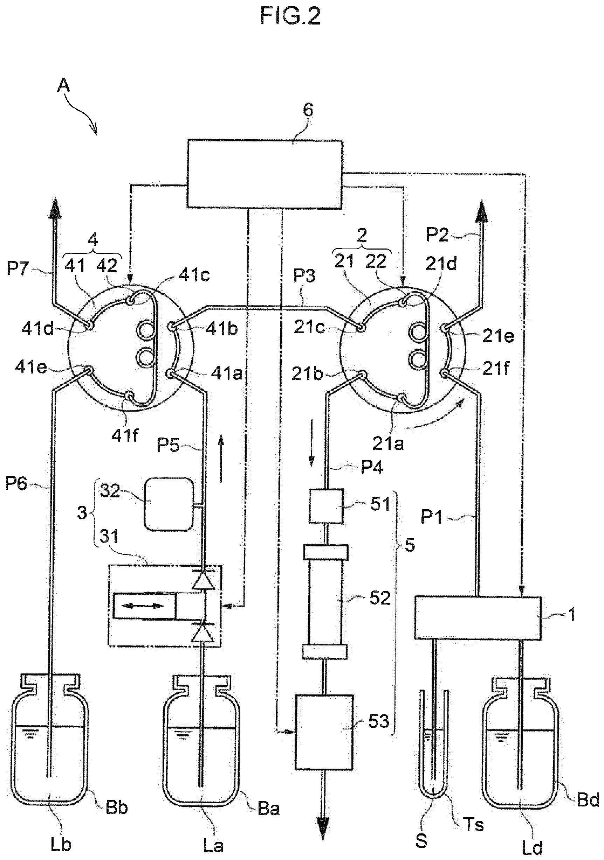

Next, as illustrated in Fig. 2, the six-way valve 21 of the flow channel switching valve 2 is, for example, rotated 60° counterclockwise. Accordingly, the ports 21a, 21d are connected to the injection loop 22, the port 21b is connected to the piping P4, the port 21c is connected to the piping P3, the port 21e is connected to the piping P2, and the port 21f is connected to the piping P1. Eluent La is delivered from the delivery mechanism 3 to the flow channel switching valve 4 by driving the plunger pump 31 in this state. The eluent La flows toward the flow channel switching valve 2 through the ports 41a, 41b and the piping P3. Then, together with the eluent La, the given amount of sample SL stocked in the injection loop 22 is fed to the analysis unit 5. Specified components contained in the sample SL are analyzed using the detection apparatus 53 in the analysis unit 5.

In a state in which the above analysis is either ongoing or has been completed, components other than the specified components to be analyzed, which are not components subject to analysis, become attached to, for example, the column 52. These other components may be needed in measurement results during analysis, or may be components that impede subsequent analysis. Thus, the controller 6 also performs control to dissolve and clean out these other components.

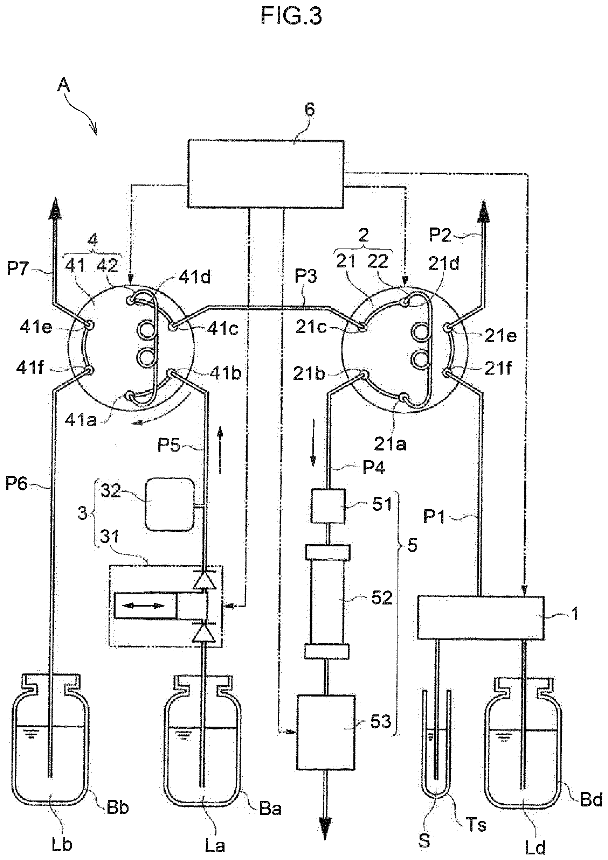

Namely, as illustrated in Fig. 3, the six-way valve 41 of the flow channel switching valve 4 is, for example, rotated 60° clockwise. Accordingly, the ports 41a, 41d are connected to the injection loop 42, the port 41b is connected to the piping P5, the port 41c is connected to the piping P3, the port 41e is connected to the piping P7, and the port 41f is connected to the piping P6. Eluent La is delivered from the delivery mechanism 3 to the flow channel switching valve 4 by driving the plunger pump 31 in this state. The given amount of eluent Lb stocked in the injection loop 42 is then fed out to the piping P3. The eluent Lb thus becomes situated (adopts a state) sandwiched by the eluent La in the piping P3 and eluent La fed from the delivery mechanism 3.

The plunger pump 31 is then continuously driven such that all of the given amount of eluent Lb is fed out from the injection loop 42 into the piping P3. Afterwards, the delivery mechanism 3 is used to continuously deliver the eluent La such that the eluent Lb dissolves and cleans out the other components that have become attached to the column 52. Then, including the column 52, the system is filled with sufficient eluent La such that the column 52 and the like reach a salt concentration suitable for subsequent analysis.

In the liquid chromatography device A described above, the eluents La, Lb are supplied to the flow channel switching valve 4 from separate ports, and by rotating the six-way valve 41, a given amount of eluent Lb is situated within the eluent La. The eluent Lb is thus supplied to the column 52 without causing excessive turbidity, in a state in which the eluent Lb is sandwiched by the eluent La. If the salt concentration in the column 52 changes quickly when this happens, it is not necessary to wait a long time until the salt concentration returns to a desired concentration (namely, to the salt concentration of the eluent La), enabling liquid chromatography analysis time to be shortened.

### Configuration of Detection Apparatus

Next, explanation follows regarding the detection apparatus 53 employed in the liquid chromatography device A.

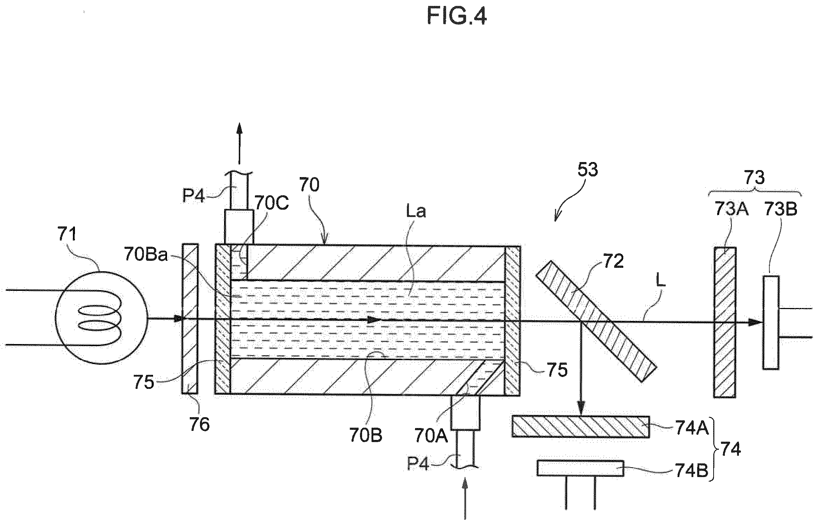

As illustrated in Fig. 4 to Fig. 7, the detection apparatus 53 optically detects hemoglobin contained in the eluents La, Lb (namely, contained in the eluate composed from the eluents La, Lb, and the desorbed sample) that have been passed through the column 52 (see Fig. 1, etc.). In Fig. 4 to Fig. 7, in order to facilitate understanding of the configuration of the detection apparatus 53, the eluate fed from the column 52 to the detection apparatus 53 is illustrated as eluents La, Lb for convenience. The detection apparatus 53 includes a photometric flow cell 70 through which the eluents La, Lb (eluate) flow, a light source 71 that shines light on the flow cell 70, a beam splitter 72 that splits (namely, divides) light transmitted through the flow cell 70 two ways, a measurement photodetection system 73 that measures light, and a reference photodetection system 74 that measures light. The detection apparatus 53 also includes a scattering plate 76 that is disposed between the light source 71 and the flow cell 70 and that scatters light from the light source 71.

The flow cell 70 is for defining an area to be measured using light. The flow cell 70 includes an inlet flow channel 70A, a photometry flow channel 70B, and an outlet flow channel 70C. A side of the inlet flow channel 70A that is upstream in the direction of flow is connected to the piping P4. The photometry flow channel 70B serves as a flow channel through which light from the light source 71 passes. A side of the outlet flow channel 70C that is downstream in the direction of flow is connected to the piping P4 (see Fig. 1). The inlet flow channel 70A, photometry flow channel 70B, and outlet flow channel 70C are coupled to one another in this sequence. The inlet flow channel 70A is for introducing eluents La, Lb (eluate) fed from the column 52 (see Fig. 1) into the photometry flow channel 70B, and is connected to the column 52 (see Fig. 1) via the piping P4. The piping P4 is, for example, formed using a material with low oxygen permeability, such as nylon, polyether ether ketone (PEEK), polyethylene, or stainless steel (SUS). The flow cell 70 is, for example, configured in a tube shape.

Eluents La, Lb (eluate) subject to photometry flow through photometry flow channel 70B. The photometry flow channel 70B provides a place where the eluents La, Lb are subjected to photometry, and is formed with a straight line shape. Each end of the photometry flow channel 70B is closed off by a transparent cover 75. The photometry flow channel 70B is substantially circular in a cross-section taken along a direction orthogonal to the direction of flow. The inner diameter of the photometry flow channel 70B is, for example, approximately 1 mm. The outlet flow channel 70C is for discharging the eluents La, Lb from the photometry flow channel 70B, and is connected to a non-illustrated effluent tank via the piping P4.

The light source 71 shines light on eluents La, Lb flowing through the photometry flow channel 70B. The light source 71 is disposed in a state facing the one of the transparent covers 75 closing off an end face 70Ba of the photometry flow channel 70B such that an optical axis L of the light source 71 passes through the center of the photometry flow channel 70B. The light source 71 is capable of emitting light over a range of wavelengths, including light at the wavelength of maximum absorbance of oxyhemoglobin or from 415 nm to 420 nm, which is very close thereto, and light at a reference wavelength of 500 nm. The light source 71 is, for example, a halogen lamp. The light source 71 may of course be something other than a halogen lamp. For example, the light source 71 may include one or plural LED elements. In the first exemplary embodiment, the direction along which light from the light source 71 is shone on the measurement photodetection system 73 is set so as to be opposite to the direction of flow of the eluents La, Lb through the photometry flow channel 70B. Note that the direction along which light from the light source 71 is shone on the measurement photodetection system 73 is not limited to the configuration described above, and for example may be set so as to be the same as the direction of flow of the eluents La, Lb through the photometry flow channel 70B.

The beam splitter 72 is for splitting (namely, dividing) light emitted from the light source 71 that has been transmitted through the photometry flow channel 70B, and causing this light to be incident on the measurement photodetection system 73 and the reference photodetection system 74. The beam splitter 72 is disposed on the optical axis L in a state inclined at 45°. Various configurations, such as a half mirror, may be employed for the beam splitter 72.

The measurement photodetection system 73 is for selectively detecting light transmitted through the beam splitter 72 at the wavelength of maximum absorbance of oxyhemoglobin, 420 nm, and is disposed on the optical axis L. The measurement photodetection system 73 includes a bandpass filter 73A and a photodetection element 73B. The bandpass filter 73A serves as a first bandpass filter that selectively transmits 420 nm light. The photodetection element 73B serves as a first light receiver for detecting light transmitted through the bandpass filter 73A. A photodiode may be employed as the photodetection element 73B. Note that 420 nm light corresponds to light at one wavelength split by the beam splitter 72.

The reference photodetection system 74 selectively detects light at the reference wavelength, 500 nm, in light that has been reflected and had its optical path changed at the beam splitter 72. The reference photodetection system 74 includes a bandpass filter 74A and a photodetection element 74B. The bandpass filter 74A serves as a second bandpass filter that selectively transmits 500 nm light. The photodetection element 74B serves as a second light receiver for detecting light transmitted through the bandpass filter 74A. A photodiode may be employed as the photodetection element 74B. Note that 500 nm light corresponds to light at another wavelength split by the beam splitter 72. Also note that in the detection apparatus 53, the beam splitter 72, the measurement photodetection system 73 (namely the bandpass filter 73A and the photodetection element 73B), and the reference photodetection system 74 (namely the bandpass filter 74A and the photodetection element 74B) serve as an example of a "light-receiving unit" in the present disclosure.

The scattering plate 76 in the first exemplary embodiment is provided between the light source 71 and the photometry flow channel 70B of the flow cell 70. Light from the light source 71 is transmitted through the scattering plate 76, thereby randomly scattering or diffusing this light.
Namely, the scattering plate 76 also functions as a diffusion plate. In the detection apparatus 53, light from the light source 71 is shined on the photometry flow channel 70B of the flow cell 70 in a randomly scattered or diffused state after having been transmitted through the scattering plate 76. A translucent white resin sheet, ground glass, a resin sheet with a roughened surface, a resin sheet or glass with plural fine lines formed thereon, a resin sheet or glass with plural small openings formed therein, for example, may be employed as the scattering plate 76. The scattering plate may also employ a combination of two or more of the members in the above examples. In the first exemplary embodiment, the scattering plate 76 is, for example, configured by a translucent white resin sheet. Further, although the scattering plate 76 is configured by one translucent white resin sheet in the first exemplary embodiment, two or more translucent white resin sheets may be laid together to configure the scattering plate 76. The effect of the scattering plate 76 will be described in detail below.

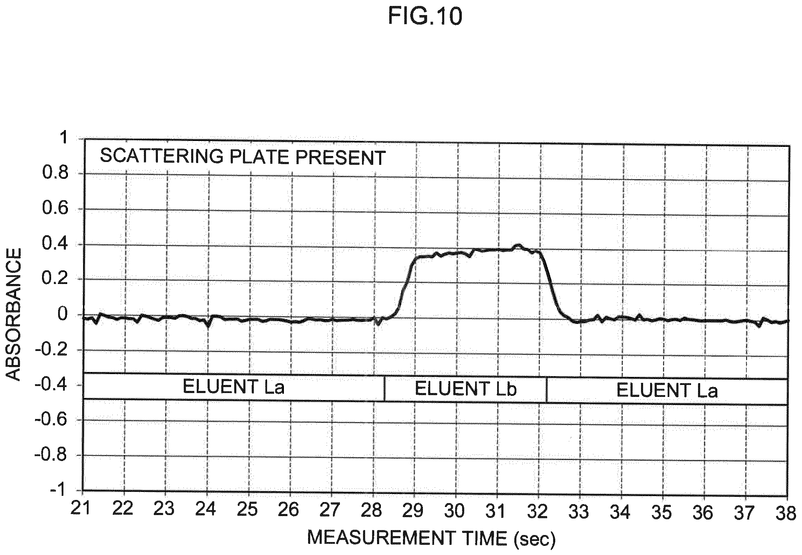

The controller 6 (see Fig. 1, etc.) is provided with a non-illustrated computation circuit. A sample waveform detected by the photodetection element 73B of the measurement photodetection system 73, and a reference waveform detected by the photodetection element 74B of the reference photodetection system 74, are measured in the computation circuit. A computation section of the controller 6 calculates absorbance by performing a comparison of the sample waveform and the reference waveform. Absorbance is, for example, calculated by subtracting the reference waveform from the sample waveform (see Fig. 10). This absorbance is used to determine the amount of glycohemoglobin contained in the eluate.

### Operation and Advantageous Effects

Next, explanation follows regarding the operation and advantageous effects of the liquid chromatography device A including the detection apparatus 53 of the first exemplary embodiment.

As illustrated in Fig. 4 to Fig. 7, eluents La, Lb (eluate) that have been passed through the column 52 (see Fig. 1, etc.) are supplied to the flow cell 70 of the detection apparatus 53 via the piping P4. The eluents La, Lb are introduced from the piping P4 into the photometry flow channel 70B via the inlet flow channel 70A in the flow cell 70. Then, after passing through the photometry flow channel 70B and the outlet flow channel 70C, the eluents La, Lb are led to the effluent tank (not illustrated in the drawings) through the piping P4.

More specifically, as illustrated in Fig. 4, first, eluent La (eluate) that has been passed through the column 52 (see Fig. 1, etc.) is supplied to the flow cell 70 of the detection apparatus 53 such that the eluent La passes through the photometry flow channel 70B.

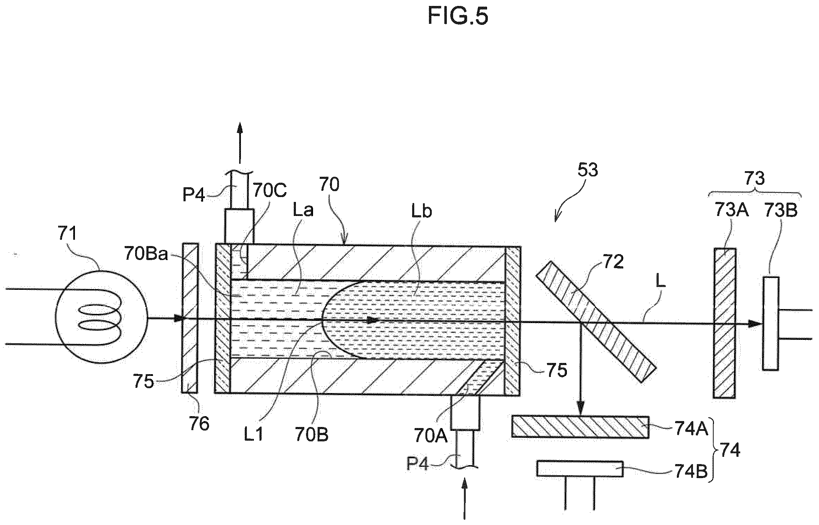

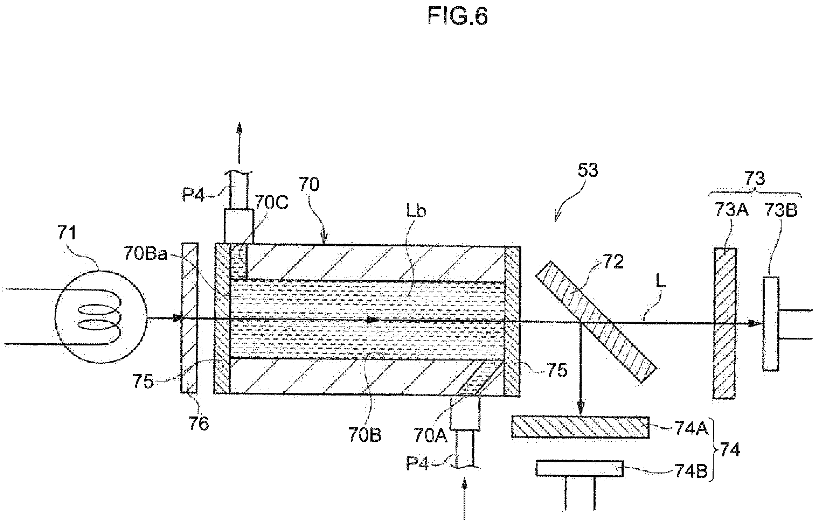

Next, the eluent La is switched with the eluent Lb as described above such that as illustrated in Fig. 5, the eluent Lb is supplied to the flow cell 70 of the detection apparatus 53 after the eluent La. An interface L1 between the eluent La and the eluent Lb thus passes through the photometry flow channel 70B. Then, as illustrated in Fig. 6, the eluent Lb passes through the photometry flow channel 70B.

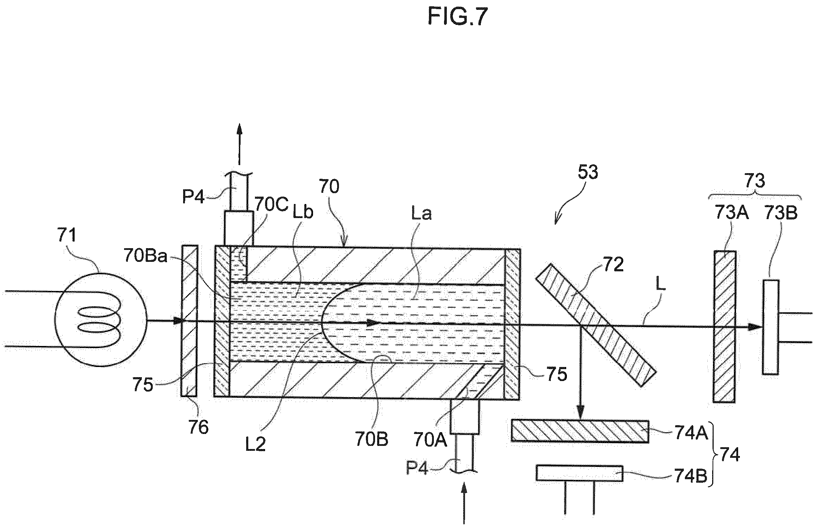

Next, the eluent Lb is switched with the eluent La as described above such that as illustrated in Fig. 7, the eluent La is supplied to the flow cell 70 of the detection apparatus 53 after the eluent Lb. An interface L2 between the eluent La and the eluent Lb thus passes through the photometry flow channel 70B. Then, although not illustrated in the drawings, the eluent La passes through the photometry flow channel 70B (see Fig. 4).

In the detection apparatus 53, as illustrated in Fig. 4 to Fig. 7, as the eluent La, eluent Lb, and eluent La flow through the photometry flow channel 70B in this sequence, light from the light source 71 that has been transmitted through the scattering plate 76 is continuously shined on the eluents. Light transmitted through the photometry flow channel 70B is then split (namely, divided) by the beam splitter 72 and detected by the measurement photodetection system 73 and the reference photodetection system 74. In the measurement photodetection system 73, light at the wavelength of maximum absorbance of oxyhemoglobin, 420 nm, transmitted through the bandpass filter 73A is selectively detected by the photodetection element 73B. In addition, in the reference photodetection system 74, light at the reference wavelength, 500 nm, transmitted through the bandpass filter 74A is selectively detected by the photodetection element 74B.

Detection results from the photodetection elements 73B, 74B are output to the computation circuit of the controller 6 illustrated in Fig. 1. The computation circuit calculates absorbance as a function of measurement time using a sample waveform detected by the photodetection element 73B of the measurement photodetection system 73 and a reference waveform detected by the photodetection element 74B of the reference photodetection system 74. More specifically, the computation circuit computes a hemoglobin chromatogram and glycohemoglobin concentration (the proportion of glycohemoglobin in the overall amount of hemoglobin). Computation results from the computation circuit are displayed on a display panel (not illustrated in the drawings) provided to the liquid chromatography device A, or are printed out either automatically or when a user operates a button.

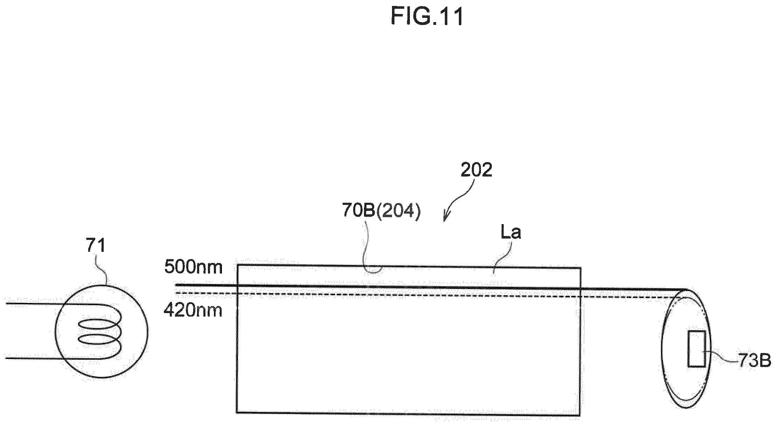

Before detailed explanation of the operation and advantageous effects of the liquid chromatography device A including the detection apparatus 53 of the first exemplary embodiment, explanation will first be given regarding a liquid chromatography device including a detection apparatus 202 of a comparative example, with reference to Fig. 11 to Fig. 14.

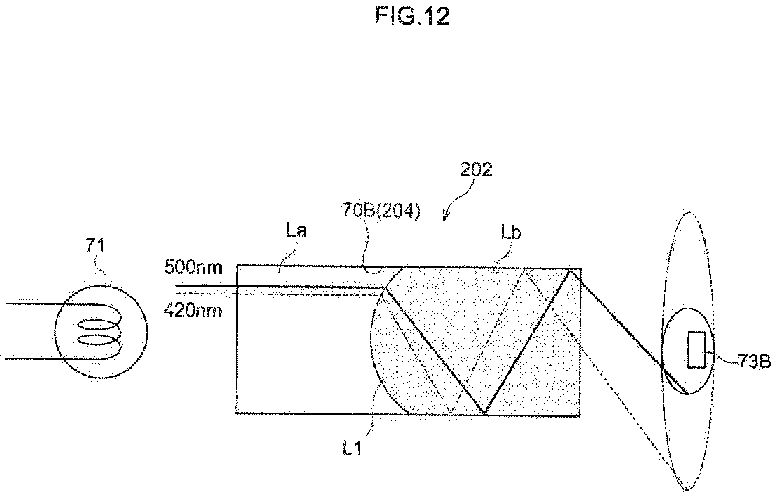

Fig. 11 and Fig. 12 schematically illustrate the detection apparatus 202 of the comparative example. As illustrated in Fig. 11 and Fig. 12, in the detection apparatus 202 of the comparative example, light from a light source 71 is shone on a photometry flow channel 70B of a flow cell 204. However, a scattering plate such as that in the first exemplary embodiment is not provided between the light source 71 and the flow cell 204. Note that in Fig. 11 and Fig. 12, in order to facilitate understanding of the configuration and operation of the detection apparatus 202, although a photodetection element 73B is illustrated, illustration of a beam splitter 72, a bandpass filter 73A, and a bandpass filter 74A and photodetection element 74B of a reference photodetection system 74 has been omitted.

As illustrated in Fig. 11, when one type of eluent (eluent La in the example of Fig. 11) flows through the photometry flow channel 70B of the flow cell 204, 420 nm light incident on the photometry flow channel 70B proceeds straight therethrough and arrives in the vicinity of the photodetection element 73B. Similarly, 500 nm light incident on the photometry flow channel 70B proceeds straight therethrough and arrives in the vicinity of the photodetection element 73B.

In contrast thereto, as illustrated in Fig. 12, when an interface between two types of eluent with differing concentrations (the interface L1 between eluent La and eluent Lb in the example of Fig. 12) flows through the photometry flow channel 70B of the flow cell 204, the refractive index of the light changes due to a lensing effect at the interface L1. The refractive indexes of light at wavelengths of 420 nm and 500 nm differ at the interface L1. Since the ratio of the amount of light absorbed by the wall faces of the photometry flow channel 70B of the flow cell 204 to the amount of light reflected is changed thereby, the intensity of light striking the photodetection element 73B varies depending on its wavelength. This is detected as a difference in concentration by the detection apparatus 202. For example, an image of the light source 71 (for example, a filament shadow in the case of a lamp, or the shape of a chip and wire bonding shadows in the case of a LED) may enter the photodetection element 73B or may miss the photodetection element 73B, changing the amount of light detected by the photodetection element 73B.

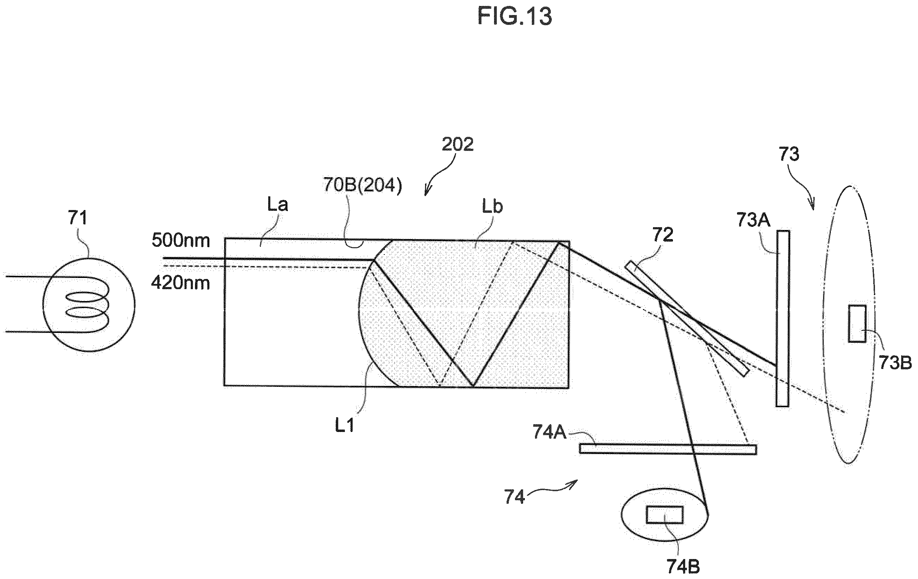

As illustrated in Fig. 13, in practice, the beam splitter 72, the bandpass filter 73A and the photodetection element 73B of the measurement photodetection system 73, and the bandpass filter 74A and the photodetection element 74B of the reference photodetection system 74 are provided on the opposite side of the photometry flow channel 70B of the flow cell 204 to the light source 71 in the detection apparatus 202. When the interface L1 between the eluent La and the eluent Lb passes through the photometry flow channel 70B of the flow cell 204, the refractive index of light at the interface L1 between the eluent La and the eluent Lb varies according to the wavelength of the light. Of the light transmitted through the beam splitter 72, 500 nm light is blocked by the bandpass filter 73A, and 420 nm light is transmitted through the bandpass filter 73A and detected by the photodetection element 73B. Of the light that has been reflected and had its optical path changed at the beam splitter 72, 420 nm light is blocked by the bandpass filter 74A, and 500 nm light is transmitted through the bandpass filter 74A and detected by the photodetection element 74B.

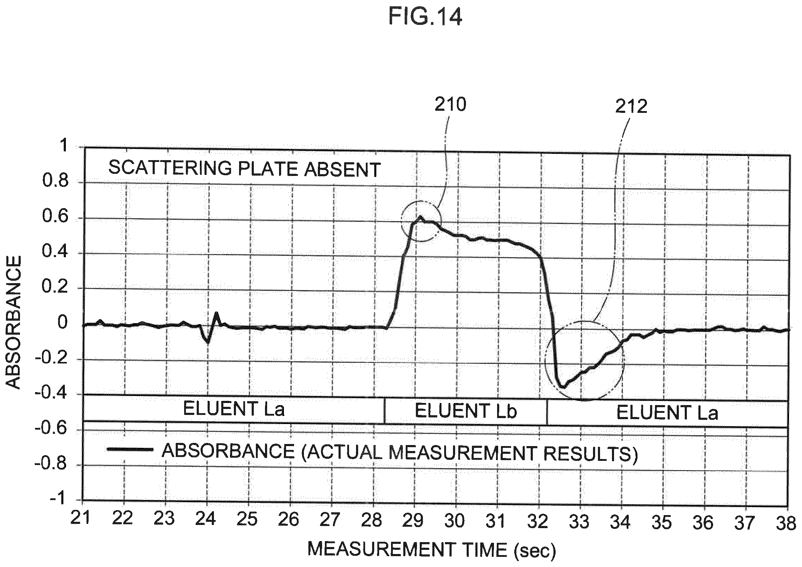

Fig. 14 illustrates the relationship between measurement time and absorbance (baseline fluctuation) resulting from switching eluents in the liquid chromatography device including the detection apparatus 202 of the comparative example. As illustrated in Fig. 14, since the eluent La and the eluent Lb have different concentrations, these is a difference in the transmittances thereof that depends on the wavelength of light. Accordingly, there is a difference in absorbance between the eluent La and the eluent Lb. Further, since the refractive index of light at the interface L1 between the eluent La and the eluent Lb (see Fig. 13) varies according to the wavelength of the light, when the eluent La is switched with the eluent Lb, there is a spike of noise 210 in the absorbance that projects along the positive vertical axis. Similarly, since the refractive index of light at the interface L2 between the eluent Lb and the eluent La (see Fig. 7) varies according to the wavelength of the light, when the eluent Lb is switched with the eluent La, there is a spike of noise 212 in the absorbance that projects along the negative vertical axis. The directions of the noise 210, 212 differ due to the differences in the concentrations of the eluent La and the eluent Lb. Accordingly, even when the eluents employed are of the same type, the chromatogram baseline may fluctuate before and after switching between eluents of differing concentrations. When the chromatogram baseline is disturbed in this manner, the surface area of components in the sample to be detected changes and accurate quantification thereof may not be possible.

Next, detailed explanation follows regarding the operation and advantageous effects of the liquid chromatography device A including the detection apparatus 53 of the first exemplary embodiment.

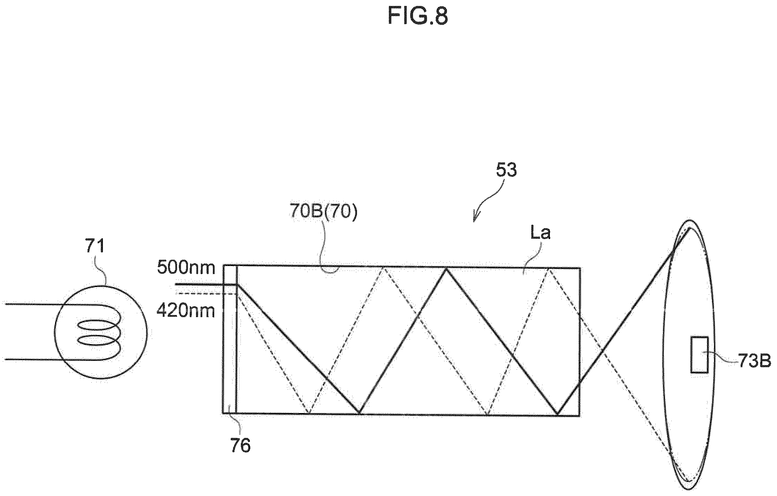

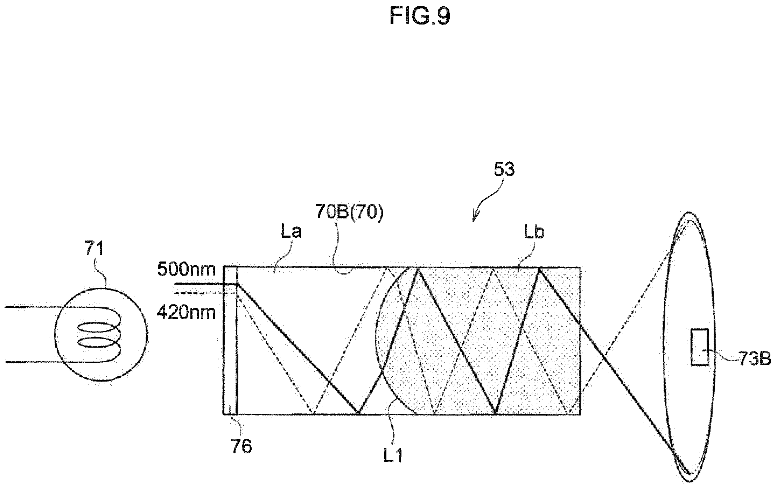

Fig. 8 and Fig. 9 schematically illustrate the detection apparatus 53 of the first exemplary embodiment. As illustrated in Fig. 8 and Fig. 9, the scattering plate 76 is disposed between the light source 71 and the flow cell 70 in the detection apparatus 53. Note that in Fig. 8 and Fig. 9, in order to facilitate understanding of the configuration and operation of the detection apparatus 53, although the photodetection element 73B is illustrated, illustration of the beam splitter 72, the bandpass filter 73A, and the bandpass filter 74A and photodetection element 74B of the reference photodetection system 74 has been omitted.

As illustrated in Fig. 8, when one type of eluent (eluent La in the example of Fig. 8) flows through the photometry flow channel 70B of the flow cell 70, light from the light source 71 is transmitted through the scattering plate 76 such that it is randomly scattered or diffused. 420 nm wavelength light and 500 nm wavelength light thus randomly reflects off the wall faces of the photometry flow channel 70B, spreading the light arriving in the vicinity of the photodetection element 73B.

Further, as illustrated in Fig. 9, when an interface between two types of eluent with differing concentrations (the interface L1 between eluent La and eluent Lb in the example of Fig. 9) flows through the photometry flow channel 70B of the flow cell 70, the refractive index of the light changes due to a lensing effect at the interface L1. When this occurs, since the light from the light source 71 has already been randomly scattered or diffused by transmission through the scattering plate 76, there is no change is the breadth of the light arriving in the vicinity of the photodetection element 74B even when two types of eluent, for which there is a difference in refractive index, are passing through the photometry flow channel 70B.

Fig. 10 is a baseline illustrating the relationship between measurement time and absorbance resulting from switching eluents in the liquid chromatography device A including the detection apparatus 53 of the first exemplary embodiment. As illustrated in Fig. 10, since the eluent La and the eluent Lb have different concentrations, there is a difference in the transmittances thereof that depends on the wavelength of light. Accordingly, there is a difference in absorbance between the eluent La and the eluent Lb. However, unevenness in the light is suppressed due to the light entering the flow cell 70 being randomly scattered or diffused by the scattering plate 76. Thus, when the eluent La and the eluent Lb are switched, there are no a spikes of noise in the absorbance.

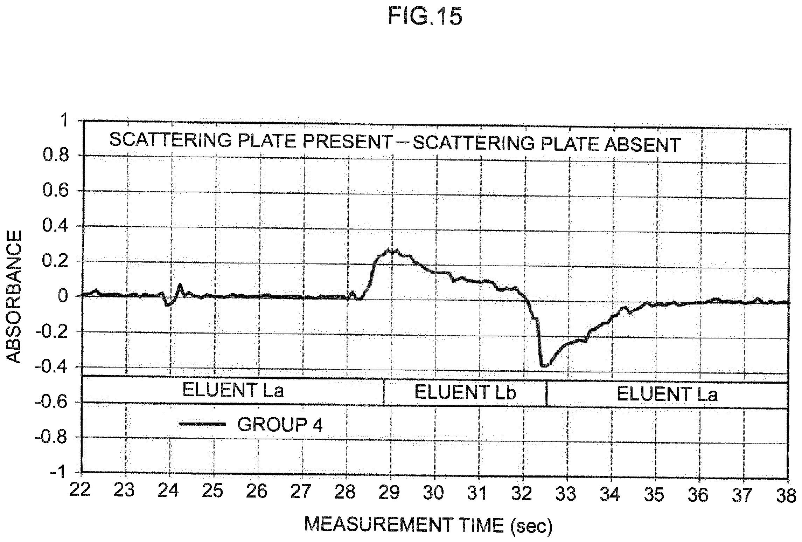

Fig. 15 illustrates the relationship between measurement time and absorbance when the absorbance for which there was no scattering plate illustrated in Fig. 14 is subtracted from the absorbance for which the scattering plate 76 was present illustrated in Fig. 10. As illustrated in Fig. 15, noise is evident in the difference between absorbance for which the scattering plate 76 was present and absorbance for which there was no scattering plate.

In the liquid chromatography device A described above, the scattering plate 76 that randomly scatters light transmitted therethrough is provided between the light source 71 and the photometry flow channel 70B of the flow cell 70 along the direction of travel of light from the light source 71 of the detection apparatus 53. Light from the light source 71 is thus randomly scattered or diffused by transmission through the scattering plate 76. Accordingly, when the interfaces L1, L2 between two types of eluents La, Lb respectively pass through the photometry flow channel 70B of the flow cell 70, variation in the amount of light arriving at the measurement photodetection element 73B and the reference photodetection element 74B due to lensing effects is suppressed. This enables disturbances in the chromatogram baseline to be suppressed, enabling accurate measurement of the specified components in the sample.

Further, in the liquid chromatography device A, the scattering plate 76 is a separate body disposed between the light source 71 and the photometry flow channel 70B of the flow cell 70. Accordingly, since the separate scattering plate 76 may be disposed anywhere between the light source 71 and the flow cell 70 of an existing detection apparatus, manufacture of the detection apparatus 53 is simplified, enabling costs to be reduced.

### Second Exemplary Embodiment

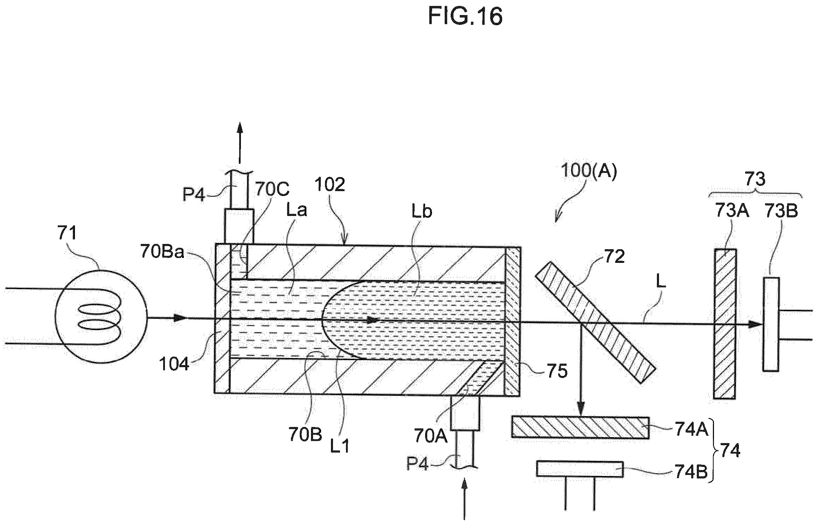

Fig. 16 is a cross-section illustrating a detection apparatus 100 employed in a liquid chromatography device A of a second exemplary embodiment. As illustrated in Fig. 16, in place of the transparent cover 75 on the light source 71 side of the flow cell 70 illustrated in Fig. 4, the detection apparatus 100 is provided with a scattering plate 104 that closes off the end face 70Ba on the light source 71 side of the photometry flow channel 70B of a flow cell 102. The scattering plate 104 is provided between the light source 71 and the photometry flow channel 70B of the flow cell 102 along the direction of travel of light from the light source 71. The scattering plate 104 randomly scatters light from the light source 71. The scattering plate 104 configures (i.e. forms) a portion of the walls of the flow cell 102. A translucent white resin sheet, ground glass, a resin sheet or glass with a roughened surface, may for example be employed as the scattering plate 104.

In the liquid chromatography device A including the detection apparatus 100 described above, light from the light source 71 is randomly scattered or diffused by transmission through the scattering plate 104. Accordingly, when the interfaces L1, L2 between two types of eluents La, Lb respectively pass through the photometry flow channel 70B of the flow cell 102, variation in the amount of light arriving at the photodetection elements 73B, 74B due to lensing effects is suppressed. This enables disturbances in the chromatogram baseline to be suppressed, enabling accurate measurement of the specified components in the sample.

### Third Exemplary Embodiment

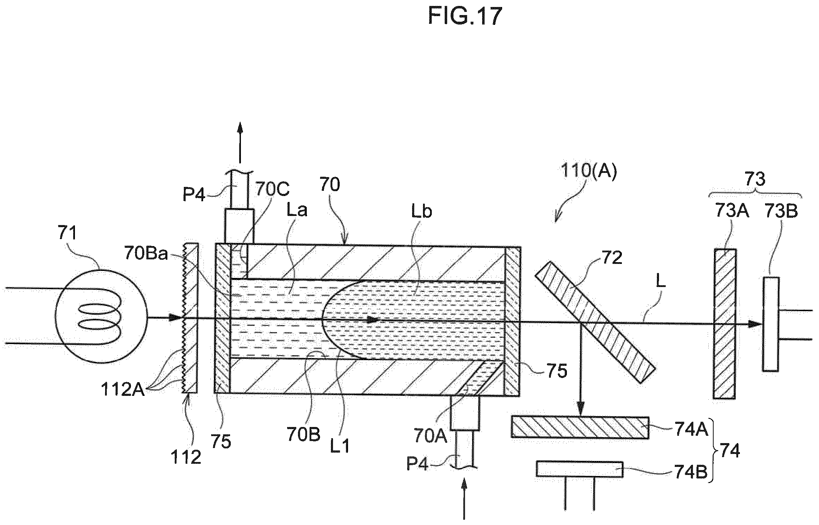

Fig. 17 is a cross-section illustrating a detection apparatus 110 employed in a liquid chromatography device A of a third exemplary embodiment. As illustrated in Fig. 17, in place of the scattering plate 76 of the detection apparatus 53 illustrated in Fig. 4, the detection apparatus 110 is provided with a separate scattering plate 112 that randomly scatters light from the light source 71 between the light source 71 and the photometry flow channel 70B of the flow cell 70 along the direction of travel of light from the light source 71. The scattering plate 112 is configured from glass or a resin sheet on which plural fine lines 112A have been formed on the face on the light source 71 side thereof.

In the liquid chromatography device A including the detection apparatus 110 described above, light from the light source 71 is randomly scattered or diffused by transmission through the scattering plate 112. Accordingly, when the interfaces L1, L2 between two types of eluents La, Lb respectively pass through the photometry flow channel 70B of the flow cell 70, variation in the amount of light arriving at the photodetection elements 73B, 74B due to lensing effects is suppressed. This enables disturbances in the chromatogram baseline to be suppressed, enabling accurate measurement of the specified components in the sample.

### Fourth Exemplary Embodiment

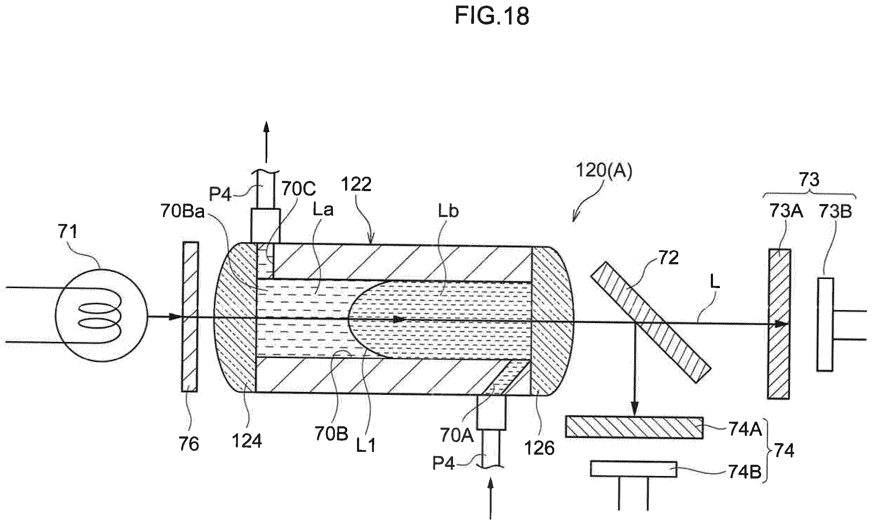

Fig. 18 is a cross-section illustrating a detection apparatus 120 employed in a liquid chromatography device A of a fourth exemplary embodiment. As illustrated in Fig. 18, in place of the transparent covers 75 closing off both sides of the photometry flow channel 70B of the flow cell 70 illustrated in Fig. 4, the detection apparatus 120 is provided with a lens 124 that closes off the light source 71 side of the photometry flow channel 70B of a flow cell 122 and a lens 126 that closes off the beam splitter 72 side of the photometry flow channel 70B of the flow cell 122. The lens 124 is shaped so as to converge light toward the center of the photometry flow channel 70B, and the lens 126 is shaped so as to converge light toward the center of the beam splitter 72. In the detection apparatus 120, the scattering plate 76 is disposed between the light source 71 and the photometry flow channel 70B of the flow cell 122 along the direction of travel of light from the light source 71.

In addition to the advantageous effects resulting from the scattering plate 76 described above, using the lenses 124, 126, the liquid chromatography device A including the detection apparatus 120 described above is able to reduce the amount of light transmitted through the photometry flow channel 70B of the flow cell 122 that misses the photodetection elements 73B, 74B.

### Supplemental Explanation

Note that although the scattering plate 104 is disposed so as to configure a portion of the walls of the flow cell 102 in the second exemplary embodiment described above (see Fig. 16), the present disclosure is not limited to this configuration. For example, a scattering plate may be disposed so as to configure (i.e. form) another portion of the walls of a flow cell, or so as to configure (i.e. form) all walls of a flow cell.

Further, although the scattering plates 76, 104, 112 are disposed between the light source 71 and the photometry flow channel 70B of the flow cells 70, 102, 122 along the direction of travel of light from the light source 71 in the first to fourth exemplary embodiments described above, the present disclosure is not limited to this configuration. For example, configuration may be such that a scattering plate is provided between the photometry flow channel 70B of a flow cell and the beam splitter 72, along the direction of travel of light from the light source 71.

Further, although plural fine lines 112A are formed on the side face of the scattering plate 112 facing the light source 71 in the third exemplary embodiment described above, the present disclosure is not limited to this configuration. For example, the configuration may be such that plural fine lines are formed on a face on the opposite side of a scattering plate to the light source 71, or such that plural fine lines are formed on both faces of a scattering plate.

Further, although the scattering plate 76 is provided between the light source 71 and the lens 124 of the flow cell 122 along the direction of travel of light from the light source 71 in the fourth exemplary embodiment described above, the present disclosure is not limited to this configuration. For example, a scattering plate selected from out of, for example, ground glass, a resin sheet with a roughened surface, a resin sheet or glass with plural fine lines formed thereon, or a resin sheet or glass with plural small openings formed therein, may be employed in place of the scattering plate 76. A scattering plate combining of two or more of the members in the above examples may also be employed.

Further, the fourth exemplary embodiment described above may be configured without a scattering plate 76, and such one of the lenses 124, 126, or both of the lenses 124, 126, serves as a scattering plate. For example, a configuration may be adopted in which light is scattered by making such a lens translucent white or by roughening at least a portion of a surface thereof.

Further, although elements from the light source 71 to the photodetection element 73B of the measurement photodetection system 73 are disposed in substantially a straight line, and the scattering plates 76, 104, 112 are disposed between the light source 71 and the photometry flow channel 70B of the flow cells 70, 102, 122 in the first to fourth exemplary embodiments described above, the present disclosure is not limited to this configuration. For example, in cases in which light from the light source 71 is reflected by a mirror or the like, the configuration may be such that a scattering plate is disposed after where the light is reflected by the mirror, between the light source 71 and a light-receiving unit (for example, the beam splitter 72, the measurement photodetection system 73, and the reference photodetection system 74) along the direction of travel of light from the light source 71.

Further, although explanation was given of a detection apparatus that splits light transmitted through a flow cell 70, 102, 122 two ways in the first to fourth exemplary embodiments described above, the present disclosure is not limited to this configuration. For example, the configuration may be such that light transmitted through a flow cell 70, 102, 122 is not made to diverge, and a single measurement is performed using a single photodetection system (light-receiving unit, for example). In such cases, a scattering plate may be provided at any position so long as it is between the light source and the light-receiving unit along the direction of travel of light from the light source.

Explanation has been given regarding exemplary embodiments for implementing the present disclosure. However, the exemplary embodiments herein are merely examples, and various modifications may be implemented within a range not departing from the scope of the claims. Moreover, it goes without saying that the scope of rights of the present disclosure are not limited by the exemplary embodiments herein, and various modifications may be implemented within a range not departing from the scope of the claims.

### Reference Signs

- 3: delivery mechanism (eluent supply mechanism)
- 4: flow channel switching valve (eluent supply mechanism)
- 52: column
- 53: detection apparatus
- 70: flow cell
- 70B: photometry flow channel (flow channel)
- 71: light source
- 72: beam splitter
- 73A: bandpass filter (first bandpass filter)
- 73B: photodetection element (first light receiver)
- 74A: bandpass filter (second bandpass filter)
- 74B: photodetection element (second light receiver)
- 76: scattering plate
- 100: detection apparatus
- 102: flow cell
- 104: scattering plate
- 110: detection apparatus
- 112: scattering plate
- 120: detection apparatus
- 122: flow cell
- A: liquid chromatography device
- La, Lb: eluent
- S: specimen
- SL: sample

## Claims

1. A liquid chromatography device (A) comprising:
a column (52) operable to separate components in a specimen sample;
an eluent supply mechanism (3, 4) operable to alternately supply two or more types of eluent (La, Lb) to the column, wherein said eluents have differing salt concentrations; and
a detection apparatus (53; 100; 110; 120) for receiving the eluents after the eluents have passed through the column (52), the detection apparatus being configured to detect a specified component of the specimen sample contained in the eluents,
the detection apparatus (53; 100; 110; 120) comprising:
a flow cell (70; 102; 122) comprising a flow channel (70B) for receiving a flow of eluents,
a light source (71) that is provided outside of the flow cell and that is operable to irradiate light onto the eluents flowing through the flow channel, and
a light-receiving unit (73, 74) that is provided outside of the flow cell and that is configured to receive light that has passed through the flow cell,
**characterized in that** the detection apparatus (53; 100; 110; 120) comprises a scattering plate (76; 104; 112) capable of randomly scattering the light irradiated from the light source, the scattering plate being provided between the light source (71) and the flow channel (70B) of the flow cell (70; 102; 122) along a direction of travel of light from the light source, so that in use, the light irradiated from the light source shines on the flow channel (70B) of the flow cell (70; 102; 122) in a randomly scattered state.

2. The liquid chromatography device of claim 1, wherein the light-receiving unit (73, 74) comprises:
a beam splitter (72) that is provided outside of the flow cell (70; 102; 122) and that is configured to split light that has passed through the eluents flowing through the flow channel (70B),
a first bandpass filter (73A) operable to transmit one wavelength of light that has been split at the beam splitter,
a first light receiver (73B) configured to receive light transmitted through the first bandpass filter,
a second bandpass filter (74A) operable to transmit another wavelength of light that has been split at the beam splitter, and
a second light receiver (74B) configured to receive light transmitted through the second bandpass filter.

3. The liquid chromatography device of claims 1 or 2, wherein the scattering plate (104) forms at least a portion of a wall of the flow cell (102).

4. The liquid chromatography device of any of claims 1 to 3, wherein the scattering plate (76; 104; 112) comprises a sheet of resin that randomly scatters light due to having a translucent white color and/or due to at least a portion of a surface of the sheet of resin being roughened.

5. The liquid chromatography device of any of claims 1 to 3, wherein the scattering plate (76; 104; 112) comprises a sheet of glass that randomly scatters light due to having a translucent white color and/or due to at least a portion of a surface of the sheet of glass being roughened.

6. The liquid chromatography device of any of claims 1 to 3, wherein the scattering plate (76; 104; 112) comprises a lens that randomly scatters light due to having a translucent white color and/or due to at least a portion of a surface of the lens being roughened.

7. The liquid chromatography device of any of claims 1 to 3, wherein the scattering plate (76; 104; 112) comprises a resin or glass plate with a plurality of lines formed thereon.

8. The liquid chromatography device of any of claims 1 to 3, wherein the scattering plate (76; 104; 112) comprises a resin or glass plate with a plurality of openings formed therein.

9. The liquid chromatography device of any of claims 1 to 3, wherein the scattering plate (76; 104; 112) comprises ground glass.

10. The liquid chromatography device of any preceding claim, comprising a first lens (124) that closes off a light source-side of the flow channel (70B), and a second lens (126) that closes off the opposed side of the flow channel (70B).

11. The liquid chromatography device of claim 10, wherein the first lens (124) is shaped to converge light towards the centre of the flow channel (70B), and/or wherein the second lens (126) is shaped to converge light towards the center of a beam splitter (72).

## Patentansprüche

1. Flüssigchromatografievorrichtung (A), umfassend:
eine Säule (52), die zum Trennen von Komponenten in einer Probe betreibbar ist;
einen Eluenten-Zufuhrmechanismus (3, 4), der so betrieben werden kann, dass er der Säule abwechselnd zwei oder mehr Arten von Eluenten (La, Lb) zuführt, wobei die Eluenten unterschiedliche Salzkonzentrationen aufweisen; und
eine Detektionseinrichtung (53; 100; 110; 120) zum Empfangen der Eluenten, nachdem die Eluenten die Säule (52) durchlaufen haben, wobei die Detektionseinrichtung so konfiguriert ist, dass sie eine bestimmte Komponente der in den Eluenten enthaltenen Probe detektiert,
wobei die Detektionseinrichtung (53; 100; 110; 120) Folgendes umfasst:
eine Durchflusszelle (70; 102; 122), die einen Strömungskanal (70B) zum Aufnehmen eines Flusses von Eluenten umfasst,
eine Lichtquelle (71), die außerhalb der Strömungszelle vorgesehen ist und so betreibbar ist, dass sie Licht auf die durch den Strömungskanal fließenden Eluenten strahlt, und
eine Lichtempfangseinheit (73, 74), die außerhalb der Strömungszelle vorgesehen ist und so konfiguriert ist, dass sie Licht empfängt, das durch die Strömungszelle hindurchgegangen ist,
**dadurch gekennzeichnet, dass** die Detektionseinrichtung (53; 100; 110; 120)
eine Streuplatte (76; 104; 112) umfasst, die das von der Lichtquelle ausgestrahlte Licht zufällig streuen kann, wobei die Streuplatte zwischen der Lichtquelle (71) und dem Strömungskanal (70B) der Durchflusszelle (70; 102; 122) entlang einer Ausbreitungsrichtung des Lichts von der Lichtquelle vorgesehen ist, so dass im Gebrauch das von der Lichtquelle ausgestrahlte Licht in einem zufällig gestreuten Zustand auf den Strömungskanal (70B) der Durchflusszelle (70; 102; 122) scheint.

2. Flüssigchromatografievorrichtung nach Anspruch 1, wobei die Lichtempfangseinheit (73, 74) Folgendes umfasst:
einen Strahlteiler (72), der außerhalb der Durchflusszelle (70; 102; 122) vorgesehen ist und so konfiguriert ist, dass er Licht teilt, das durch die durch den Strömungskanal (70B) fließenden Eluenten hindurchgegangen ist,
einen ersten Bandpassfilter (73A), der so betrieben werden kann, dass er eine Wellenlänge des Lichts durchlässt, das an dem Strahlteiler geteilt wurde,
einen ersten Lichtempfänger (73B), der so konfiguriert ist, dass er durch den ersten Bandpassfilter hindurchgelassenes Licht empfängt,
einen zweiten Bandpassfilter (74A), der so betrieben werden kann, dass er eine andere Wellenlänge des Lichts durchlässt, das an dem Strahlteiler geteilt wurde, und
einen zweiten Lichtempfänger (74B), der so konfiguriert ist, dass er durch den zweiten Bandpassfilter hindurchgelassenes Licht empfängt.

3. Flüssigchromatografievorrichtung nach Anspruch 1 oder 2, wobei die Streuplatte (104) mindestens einen Teil einer Wand der Durchflusszelle (102) bildet.

4. Flüssigchromatografievorrichtung nach einem der Ansprüche 1 bis 3, wobei die Streuplatte (76; 104; 112) eine Harzscheibe umfasst, die Licht aufgrund ihrer durchscheinenden weißen Farbe und/oder aufgrund der Aufrauhung mindestens eines Teils der Oberfläche der Harzscheibe zufällig streut.

5. Flüssigchromatografievorrichtung nach einem der Ansprüche 1 bis 3, wobei die Streuplatte (76; 104; 112) eine Glasscheibe umfasst, die Licht aufgrund ihrer durchscheinenden weißen Farbe und/oder aufgrund der Aufrauhung mindestens eines Teils der Oberfläche der Glasscheibe zufällig streut.

6. Flüssigchromatografievorrichtung nach einem der Ansprüche 1 bis 3, wobei die Streuplatte (76; 104; 112) eine Linse umfasst, die Licht aufgrund ihrer durchscheinenden weißen Farbe und/oder aufgrund der Aufrauhung mindestens eines Teils einer Oberfläche der Linse zufällig streut.

7. Flüssigchromatografievorrichtung nach einem der Ansprüche 1 bis 3, wobei die Streuplatte (76; 104; 112) eine Harz- oder Glasplatte mit einer Vielzahl von darauf ausgebildeten Linien umfasst.

8. Flüssigchromatografievorrichtung nach einem der Ansprüche 1 bis 3, wobei die Streuplatte (76; 104; 112) eine Harz- oder Glasplatte mit einer Vielzahl von darin ausgebildeten Öffnungen umfasst.

9. Flüssigchromatografievorrichtung nach einem der Ansprüche 1 bis 3, wobei die Streuplatte (76; 104; 112) geschliffenes Glas umfasst.

10. Flüssigchromatografievorrichtung nach einem vorstehenden Anspruch, umfassend eine erste Linse (124), die eine lichtquellenseitige Seite des Strömungskanals (70B) verschließt, und eine zweite Linse (126), die die gegenüberliegende Seite des Strömungskanals (70B) verschließt.

11. Flüssigchromatografievorrichtung nach Anspruch 10, wobei die erste Linse (124) so geformt ist, dass sie Licht in Richtung der Mitte des Strömungskanals (70B) hin konvergiert, und/oder wobei die zweite Linse (126) so geformt ist, dass sie Licht in Richtung der Mitte eines Strahlteilers (72) hin konvergiert.

## Revendications

1. Dispositif de chromatographie liquide (A) comprenant :
une colonne (52) qui peut fonctionner pour séparer des composants dans un échantillon ;
un mécanisme d'alimentation en éluant (3, 4) qui peut fonctionner pour alimenter la colonne alternativement en deux ou plusieurs types d'éluant (La, Lb), dans lequel lesdits éluants présentent des concentrations en sel différentes ; et
un appareil de détection (53 ; 100 ; 110 ; 120) destiné à recevoir les éluants une fois que les éluants ont traversé la colonne (52), l'appareil de détection étant configuré pour détecter un composant spécifié de l'échantillon contenu dans les éluants,
l'appareil de détection (53 ; 100 ; 110 ; 120) comprenant :
une cuve à circulation (70 ; 102 ; 122) comprenant un canal de circulation (70B) destiné à recevoir une circulation d'éluants,
une source de lumière (71) qui est prévue à l'extérieur de la cuve à circulation et qui peut fonctionner pour irradier la lumière sur les éluants circulant à travers le canal de circulation, et
une unité de réception de lumière (73, 74) qui est prévue à l'extérieur de la cuve à circulation et qui est configurée pour recevoir la lumière qui a traversé la cuve à circulation,
**caractérisé en ce que** l'appareil de détection (53 ; 100 ; 110 ; 120) comprend
une plaque de diffusion (76 ; 104 ; 112) capable de diffuser de manière aléatoire la lumière irradiée à partir de la source de lumière, la plaque de diffusion étant prévue entre la source de lumière (71) et le canal de circulation (70B) de la cuve à circulation (70 ; 102 ; 122) le long d'une direction de déplacement de la lumière à partir de la source de lumière, de sorte que, en utilisation, la lumière irradiée à partir de la source de lumière brille sur le canal de circulation (70B) de la cuve à circulation (70 ; 102 ; 122) dans un état diffusé de manière aléatoire.

2. Dispositif de chromatographie liquide selon la revendication 1, dans lequel l'unité de réception de lumière (73, 74) comprend :
un séparateur de faisceau (72) qui est prévu à l'extérieur de la cuve à circulation (70 ; 102 ; 122) et qui est configuré pour séparer la lumière qui a traversé les éluants circulant à travers le canal de circulation (70B),
un premier filtre passe-bande (73A) qui peut fonctionner pour transmettre une longueur d'onde de lumière qui a été séparée au niveau du séparateur de faisceau,
un premier récepteur de lumière (73B) configuré pour recevoir la lumière transmise à travers le premier filtre passe-bande,
un second filtre passe-bande (74A) qui peut fonctionner pour transmettre une autre longueur d'onde de lumière qui a été séparée au niveau du séparateur de faisceau, et
un second récepteur de lumière (74B) configuré pour recevoir la lumière transmise à travers le second filtre passe-bande.

3. Dispositif de chromatographie liquide selon les revendications 1 ou 2, dans lequel la plaque de diffusion (104) forme au moins une portion d'une paroi de la cuve à circulation (102).

4. Dispositif de chromatographie liquide selon l'une quelconque des revendications 1 à 3, dans lequel la plaque de diffusion (76; 104 ; 112) comprend une feuille de résine qui diffuse de manière aléatoire la lumière du fait qu'elle présente une couleur blanche translucide et/ou du fait qu'au moins une portion d'une surface de la feuille de résine soit rugueuse.

5. Dispositif de chromatographie liquide selon l'une quelconque des revendications 1 à 3, dans lequel la plaque de diffusion (76; 104 ; 112) comprend une feuille de verre qui diffuse de manière aléatoire la lumière du fait qu'elle présente une couleur blanche translucide et/ou du fait qu'au moins une portion d'une surface de la feuille de verre soit rugueuse.

6. Dispositif de chromatographie liquide selon l'une quelconque des revendications 1 à 3, dans lequel la plaque de diffusion (76; 104 ; 112) comprend une lentille qui diffuse de manière aléatoire la lumière du fait qu'elle présente une couleur blanche translucide et/ou du fait qu'au moins une portion d'une surface de la lentille soit rugueuse.

7. Dispositif de chromatographie liquide selon l'une quelconque des revendications 1 à 3, dans lequel la plaque de diffusion (76; 104 ; 112) comprend une plaque de résine ou de verre avec une pluralité de lignes formées sur celle-ci.

8. Dispositif de chromatographie liquide selon l'une quelconque des revendications 1 à 3, dans lequel la plaque de diffusion (76; 104 ; 112) comprend une plaque de résine ou de verre avec une pluralité d'ouvertures formées sur celle-ci.

9. Dispositif de chromatographie liquide selon l'une quelconque des revendications 1 à 3, dans lequel la plaque de diffusion (76 ; 104 ; 112) comprend du verre dépoli.

10. Dispositif de chromatographie liquide selon l'une quelconque des revendications précédentes, comprenant une première lentille (124) qui ferme un côté de source de lumière du canal de circulation (70B), et une seconde lentille (126) qui ferme le côté opposé du canal de circulation (70B).

11. Dispositif de chromatographie liquide selon la revendication 10, dans lequel la première lentille (124) est façonnée pour faire converger la lumière vers le centre du canal de circulation (70B), et/ou dans lequel la seconde lentille (126) est façonnée pour faire converger la lumière vers le centre d'un séparateur de faisceau (72).
